# EUROPÄISCHE PATENTSCHRIFT

(11) **EP 1 400 778 B1**
(45) Veröffentlichungstag und Bekanntmachung des Hinweises auf die Patenterteilung: **05.03.2014**
(21) Anmeldenummer: 03017023.7
(22) Anmeldetag: 26.07.2003
(51) Int. Cl.: G01D 5/36, G01D 5/245

(54) **Positionsmesseinrichtung**
Position measuring device
Dispositif de mesure de position

(30) Priorität: 23.09.2002 DE 10244234
(43) Veröffentlichungstag der Anmeldung: 24.03.2004
(73) Patentinhaber: Dr. Johannes Heidenhain GmbH, 83292 Traunreut (DE)
(72) Erfinder: Strasser, Erich, 83308 Trostberg (DE)

(56) Entgegenhaltungen:
- EP-A- 1 180 665
- US-A- 5 568 048
- US-A- 6 140 636

## Beschreibung

Die Erfindung betrifft eine Positionsmesseinrichtung zur Bestimmung der absoluten Position gemäß dem Anspruch 1 sowie ein Verfahren zur absoluten Positionsmessung gemäß dem Anspruch 8.

Auf vielen Gebieten werden zur Bestimmung der Position zweier zueinander bewegter Körper vermehrt absolute Positionsmesseinrichtungen eingesetzt.

Der erste Schritt der Entwicklung von inkrementalen zu absoluten Positionsmesseinrichten war das Vorsehen von Referenzmarkierungen zusätzlich zur Inkrementalteilung. Um diese Positionsmesseinrichtungen platzsparend auszugestalten, wurde die Referenzmarkierung in die Inkrementalteilung integriert. So zeigt beispielsweise die US-A-6 140 636, die US-A-5 568 048 und die EP-A-1 180 665 Möglichkeiten auf, wie eine Referenzmarke in eine Inkrementalspur integriert werden kann, um innerhalb einer Umdrehung zumindest eine Referenzposition zu ermitteln. Nachteilig bei diesen Positionsmesseinrichtungen ist, dass nur an der Position der Referenzmarkierung die absolute Position innerhalb einer Umdrehung detektiert werden kann und dann die absolute Position weiter durch Zählung, also wieder inkremental ermittelt werden musste.

Ziel war es nun, absolute Positionsmesseinrichtungen zu schaffen, die in jeder Relativlage auch nach Unterbrechung der Versorgungsenergie sofort eine korrekte absolute Positionsinformation ausgeben können.

Die absolute Position wird dabei von einem Code verkörpert, der in mehreren parallel zueinander verlaufenden Spuren beispielsweise als Gray-Code angeordnet ist.

Besonders platzsparend ist die Anordnung der Positionsinformation in einer einzigen Codespur mit in Messrichtung hintereinander angeordneten Codeelementen. Die Codeelemente sind dabei in pseudozufälliger Verteilung hintereinander angeordnet, so dass eine bestimmte Anzahl von aufeinanderfolgenden Codeelementen jeweils ein Bitmuster bildet, das die absolute Position eindeutig definiert. Bei der Verschiebung der Abtasteinrichtung um ein einziges Codeelement wird bereits ein neues Bitmuster gebildet und über den gesamten absolut zu erfassenden Messbereich steht eine Folge von unterschiedlichen Bitmustern zur Verfügung. Ein derartiger sequentieller Code wird als Kettencode oder als Pseudo-Random-Code bezeichnet.

Bei der mehrspurigen sowie der einspurigen absoluten Codierung besteht das Problem, dass einerseits ein platzsparender Aufbau und andererseits eine hohe Auflösung erreicht werden soll.

Zur Erhöhung der Auflösung bei einer sequentiellen absoluten Codierung ist die zusätzliche Anordnung von zumindest einer Inkrementalteilung üblich. Die Periode dieser Inkrementalteilung muss an die Länge eines Codeelementes, also die maximal mögliche Schrittweite bzw. Auflösung des Codes angepasst sein. Wie in der DE 41 23 722 A1 erläutert, ist die Teilungsperiode der Inkrementalteilung exakt der Schrittweite des Codes zu wählen. Zur weiteren Erhöhung der Auflösung ist eine zweite Inkrementalspur erforderlich, dessen Teilungsperiode einen Bruchteil der Teilungsperiode der ersten Inkrementalspur beträgt. Zur Erhöhung der Auflösung der absoluten Positionsmessung, also der Unterteilung der Schrittweite des Codes sind somit mehrere nebeneinander angeordnete Inkrementalspuren erforderlich.

Diese Anordnung hat den Nachteil, dass kein platzsparender Aufbau möglich ist, und dass die Abtastelemente der beiden Inkrementalspuren senkrecht zur Messrichtung voneinander beabstandet angeordnet sind, was zur Folge hat, dass die Anordnung gegen Verdrehungen der Abtasteinheit (Moire-Schwankungen) empfindlich ist. Bei Verdrehungen zwischen der Abtasteinheit und den Inkrementalteilungen ist die erforderliche Synchronisation der von den beiden Inkrementalspuren abgeleiteten Abtastsignalen nicht mehr gewährleistet.

Aus diesem Grund wird in der EP 1 111 345 A2 vorgeschlagen, neben dem absoluten Code nur eine einzige Inkrementalteilung, die aber zwei unterschiedliche Teilungsperioden aufweist, anzuordnen. Eine Detektoranordnung ist dazu ausgelegt, um ein erstes Inkrementalsignal mit einer groben Signalperiode und ein zweites Inkrementalsignal mit einer feinen Signalperiode zu erzeugen, also Inkrementalsignale, die bei der Vorrichtung gemäß der DE 41 23 722 A1 zur Synchronisation erforderlich sind. Voraussetzung für diese Synchronisation ist eine Interpolation der Inkrementalsignale mit der groben Signalperiode, weshalb in der EP 1 111 345 A2 verschiedene Maßnahmen zur Filterung angeführt sind, um ein interpolationsfähiges Inkrementalsignal mit der groben Signalperiode aus der Inkrementalspur abzuleiten. Die Maßnahmen zur Erzeugung zweier gut interpolationsfähiger Inkrementalsignale gemäß der EP 1 111 345 A2 erfordern relativ viel Aufwand.

Der Erfindung liegt daher die Aufgabe zugrunde, eine absolute Positionsmesseinrichtung anzugeben, die kompakt aufgebaut ist und mit der auf einfache Weise eine möglichst genaue hochauflösende absolute Positionsmessung möglich ist.

Diese Aufgabe wird durch die Merkmale des Anspruches 1 gelöst.

Der Erfindung liegt weiterhin die Aufgabe zugrunde, ein Verfahren zur Bestimmung einer absoluten Position anzugeben, mit dem eine möglichst genaue und hochauflösende Positionsmessung ermöglicht wird.

Diese Aufgabe wird mit den Merkmalen des Anspruches 8 gelöst.

Vorteilhafte Ausgestaltungen der Erfindung sind in den abhängigen Ansprüchen angegeben.

Die Erfindung wird anhand der Zeichnungen näher erläutert, dabei zeigen:
- Figur 1: eine Positionsmesseinrichtung mit einer Codespur und einer Inkrementalspur in schematischer Darstellung;
- Figur 2: die Anordnung der Detektorelemente relativ zur Codespur und zur Inkrementalspur der Positionsmesseinrichtung nach Figur 1 zur Erzeugung von Abtastsignalen;
- Figur 3: eine Einrichtung zur Auswertung der Abtastsignale;
- Figur 4a: die Abtastung der Inkrementalspur in einer ersten Position;
- Figur 4b: die Abtastung der Inkrementalspur in einer zweiten Position;
- Figur 4c: die Abtastung der Inkrementalspur in einer dritten Position;
- Figur 4d: die Abtastung der Inkrementalspur in einer vierten Position;
- Figur 5: eine Zuordnungstabelle zur Auswertung der Abtastsignale der Inkrementalspur;
- Figur 6: ein Abtastbereich mit der Codespur und den der Codespur zugeordneten Abtastsignalen der Inkrementalteilung;
- Figur 7: das Prinzip der Abtastung der Codespur;
- Figur 8: die Erzeugung eines Steuersignals aus der Inkrementalspur zur Abtastung der Codespur;
- Figur 9a: eine erste Abtastposition zur Abtastung der Codespur;
- Figur 9b: eine zweite Abtastposition zur Abtastung der Codespur;
- Figur 9c: eine dritte Abtastposition zur Abtastung der Codespur und
- Figur 9d: eine vierte Abtastposition zur Abtastung der Codespur.

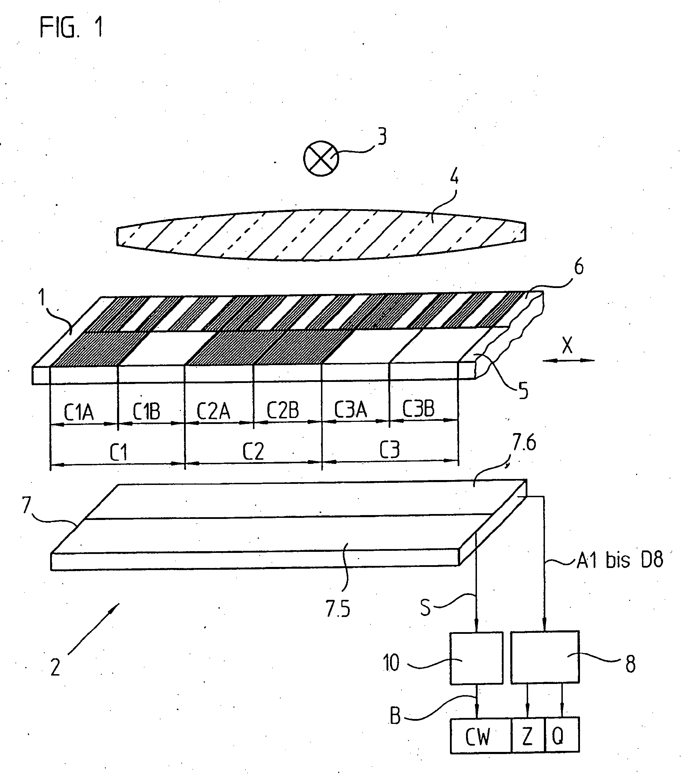

In Figur 1 ist eine erfindungsgemäß ausgestaltete Positionsmesseinrichtung als Längenmesseinrichtung dargestellt. Diese Positionsmesseinrichtung arbeitet nach dem optischen Abtastprinzip, bei dem ein Maßstab 1 von einer Abtasteinrichtung 2, die in Messrichtung X relativ zum Maßstab 1 bewegbar angeordnet ist, abgetastet wird.

Der prinzipielle Aufbau entspricht einer üblichen Positionsmesseinrichtung, wie beispielsweise in der DE 41 23 722 A1 dargestellt. Die Abtasteinrichtung 2 enthält eine Lichtquelle 3, deren Licht über eine Kollimatorlinse 4 mehrere Spuren 5 und 6 beleuchtet. Das Licht wird von den Spuren 5, 6 positionsabhängig moduliert, so dass hinter den Spuren 5, 6 eine positionsabhängige Lichtverteilung entsteht, die von der Detektoreinheit 7 der Abtasteinrichtung 2 erfasst wird.

Die Spur 5 ist im dargestellten Beispiel ein sequentieller Code, der aus einer in Messrichtung X hintereinander angeordneten Folge von gleich langen Codeelementen C1, C2, C3 besteht. Die Länge eines Codeelementes C1, C2, C3 entspricht der Schrittweite, in der eine absolute Position eindeutig bestimmbar ist.

Um die absolute Positionsmessung besonders störsicher zu machen, besteht jedes Codeelement C1, C2, C3 wiederum aus zwei gleich langen in Messrichtung X nebeneinander unmittelbar aufeinanderfolgend angeordneten Teilbereichen C1A, C1B; C2A, C2B; C3A, C3B, die zueinander komplementär ausgebildet sind. Komplementär bedeutet dabei, dass sie inverse Eigenschaften besitzen, also beim optischen Abtastprinzip transparent und nicht transparent bzw. bei Auflicht-Abtastung reflektierend bzw. nicht reflektierend sind. Ein derartiger Code wird auch als Manchestercode bezeichnet.

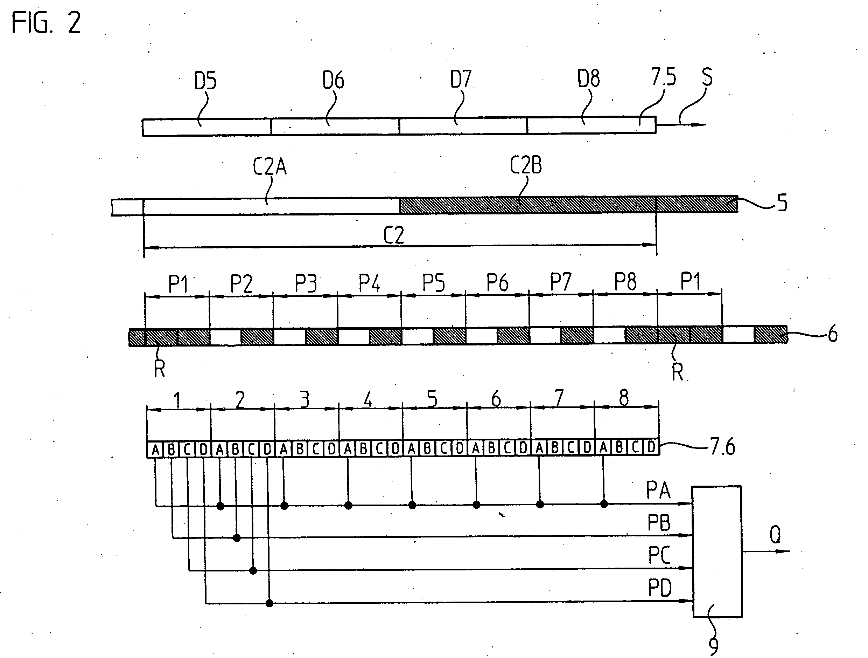

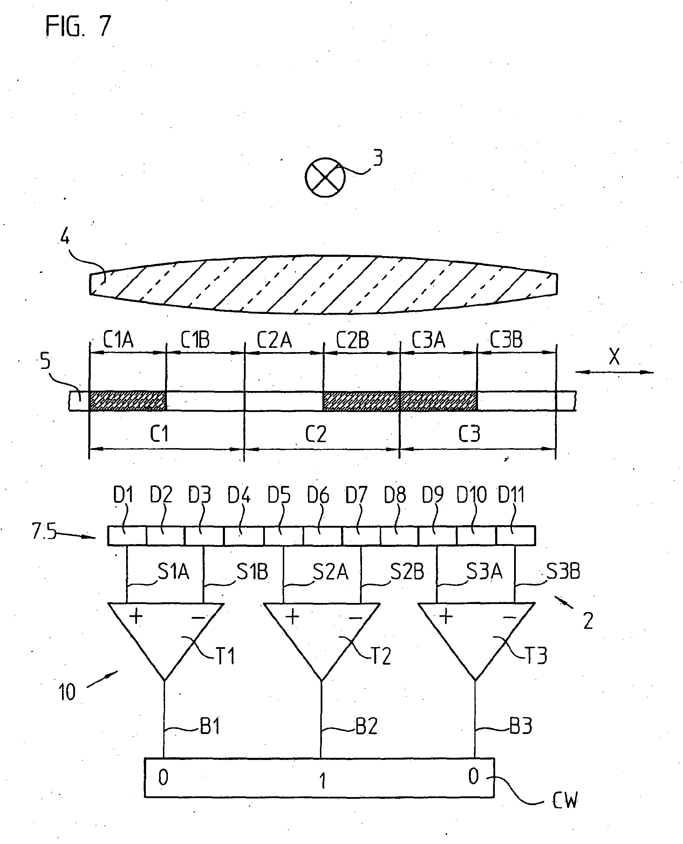

Die Detektoreinheit 7 besteht aus einer Detektoranordnung 7.5 mit einer in Messrichtung X angeordneten Folge von Detektorelement D1 bis 11 (in Figur 2 und Figur 7 im Detail dargestellt). Jedem Teilbereich C1A, C1B eines Codeelementes C1 ist in jeder Relativlage zumindest ein Detektorelement D1 bis D11 eindeutig zugeordnet, so dass in jeder Relativlage der Detektoreinheit 7 gegenüber der Codespur 5 ein Abtastsignal S aus jedem Teilbereich C1A, C1B gewonnen wird. Diese Abtastsignale S werden einer Auswerteeinrichtung 10 zugeführt, welche jedem Codeelement C1, C2, C3 einen digitalen Wert B=0 oder B=1 zuordnet. Beim Manchestercode 5 ist der digitale Wert B von der Abfolge der Teilbereiche C1A und C1B abhängig. Beispielsweise bedeutet die Abfolge C1A = opak und C1B = transparent den digitalen Wert B1=0 und die Abfolge C2A = transparent und C2B = opak den digitalen Wert B2=1. Eine besonders störsichere Bildung des digitalen Wertes B erfolgt durch Differenzbildung der Abtastsignale aufeinanderfolgender Teilbereiche C1A, C1B eines Codeelementes C1, die später noch im Detail erläutert wird.

Die Detektoranordnung 7.5 ist zur gleichzeitigen Abtastung mehrerer aufeinanderfolgender Codeelemente C1, C2, C3 ausgelegt. Eine Folge mehrerer digitaler Werte B1, B2, B3 ergibt ein Codewort CW, welches die absolute Position definiert. Bei einer Verschiebung der Detektoreinheit 7 gegenüber dem Maßstab 1 um die Breite bzw. Länge eines Codeelementes C1, C2, C3 wird ein neues Codewort CW erzeugt und über den absolut zu vermessenden Weg bzw. Winkel wird eine Vielzahl von unterschiedlichen Codewörtern CW gebildet.

Zur Erhöhung der Auflösung, also zur weiteren Unterteilung einer Schrittweite der absoluten Positionsmessung ist parallel neben der Codespur 5 eine Inkrementalteilung 6 angeordnet. Die Länge einer Teilungsperiode P ist ein Bruchteil der Länge eines Codeelementes C1, C2, C3.

Figur 2 zeigt einen Ausschnitt der Positionsmesseinrichtung gemäß Figur 1 in schematischer Darstellung. Durch diese Darstellung wird die Zuordnung der Spuren 5, 6 zueinander sowie zu den Detektoranordnungen 7.5 und 7.6 verdeutlicht.

Die Inkrementalteilung 6 wird in bekannter Weise abgetastet, indem einer Teilungsperiode P im gegenseitigen Abstand von ¼ der Teilungsperiode jeweils ein Detektorelement A, B, C, D zugeordnet ist. Die Detektorelemente A, B, C, D erzeugen vier um 90° gegeneinander phasenverschobene interpolationsfähige sinusförmige Analogsignal A1 bis D8. Parallel zum Codeelement C2 sind acht Teilungsperioden P1 bis P8 angeordnet. In jeder Teilungsperiode P1 bis P8 befindet sich die Detektorelementenanordnung A, B, C, D. Gleichphasige Detektorelemente A, B, C, D aller Teilungsperioden P1 bis P8 werden aufaddiert, so dass ein 0°-Signal PA, ein 90°-Signal PB, ein 180°-Signal PC und ein 270°-Signal PD erzeugt wird. Diese vier um 90° gegeneinander phasenverschobenen analogen Abtastsignale PA, PB, PC, PD werden in einer Interpolationseinheit 9 in bekannter Weise unterteilt, wodurch eine weitere absolute Positionsinformation Q gewonnen wird, die eine Länge einer Teilungsperiode P in kleine Messschritte unterteilt. Nun besteht noch das Problem, dass der Interpolationswert Q nur einen Bruchteil der Länge eines Codeelementes C2, also den Bruchteil eines Messbereichs eindeutig absolut auflöst. Zur eindeutigen Kombination der Positionswerte CW und Q zu einem gemeinsamen absoluten Positionsmesswert ist somit eine weitere Positionsbestimmung erforderlich.

Die Erfindung geht nun von der Erkenntnis aus, dass es hierzu ausreicht, die Verlagerung einer der Perioden P1 bis P8 über die Länge eines Codeelementes C2 - also der Schrittweite der absoluten Positionsmessung - zu beobachten. Hierzu ist innerhalb einer der Teilungsperioden P1 bis P8 eine Referenzmarkierung R angeordnet. Die Detektoranordnung 7.6 erfasst die Bewegung dieser Referenzmarkierung R über die Länge eines Codeelementes C2.

Die Referenzmarkierung R ist eine partielle Unterbrechung der Periodizität der Inkrementalteilung 6. Diese Unterbrechung ist im Beispiel eine Schwärzung eines an sich transparenten Ortes innerhalb der Teilungsperiode P1. Die übergeordnete Periodizität der Folge der Teilungsperioden P1 bis P8 wird durch diese partielle Unterbrechung nicht gestört.

Die Detektion der Verlagerung der Referenzmarkierung R innerhalb der Detektoranordnung 7.6 über eine Länge eines Codeelementes C2 erfolgt durch Auswertung der analogen Abtastsignale der Detektorelemente A bis D innerhalb P1 bis P8. Diese Abtastsignale der ersten Vierergruppe A bis D werden A1 bis D1, die der zweiten nachfolgenden Vierergruppe A bis D werden A2 bis D2 und die der achten Vierergruppe A bis D innerhalb der Länge eines Codeelementes C2 werden A8 bis D8 bezeichnet.

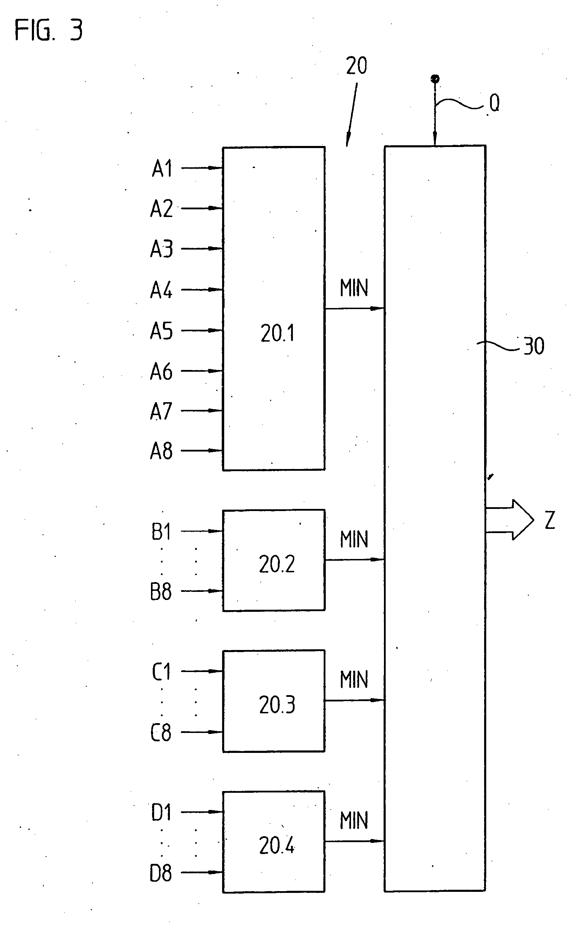

Die Referenzmarkierung R stört den kontinuierlichen periodischen Verlauf der Abtastsignale A1 bis D8 an einem einzigen Ort innerhalb einer Länge des Codeelementes C2 und in einer in Figur 3 dargestellten Auswerteeinheit 20 wird der Ort dieser Störung festgestellt. Es wird detektiert, in welcher Vierergruppe 1 bis 8 der Detektorelemente A, B, C, D sich die Störung befindet, das heißt es wird einer der acht Detektorbereiche 1 bis 8 eindeutig festgelegt. Diese Detektion bestimmt also einen absoluten Positionswert Z mit einer mittleren Auflösung derart, dass die Kombination von CW und Z sowie Q eine eindeutige Absolutposition ergibt.

Mit der erfindungsgemäß ausgestalteten Positionsmesseinrichtung ist somit ein grober absoluter Positionswert CW mit einer ersten Schrittweite bestimmbar. Diese Schrittweite wird weiter absolut durch Abtastung der Inkrementalspur 6 aufgelöst. Die Abtastsignale A1 bis D8 werden in der Auswerteeinheit 8 (Figur 1) derart verarbeitet, dass ein mittlerer Absolutwert Z mit einer zweiten Schrittweite ermittelt wird sowie ein feiner Absolutwert Q mit einer dritten Schrittweite, welche die zweite Schrittweite wiederum absolut feiner auflöst.

Anhand der Figuren 3 bis 5 wird eine Möglichkeit zur Bestimmung des Positionswertes Z weiter erläutert. Da die Referenzmarkierung R eine Schwärzung ist, werden positionsabhängig Abtastsignale A1 bis D8 innerhalb einer einzigen Gruppe 1 bis 8 durch Absinken der Amplitude beeinflusst. Um diese Detektorgruppe 1 bis 8 aufzufinden ist eine Bestimmungsschaltung 20 vorgesehen. Diese Bestimmungsschaltung 20 enthält einen ersten Baustein 20.1, dem gleichphasige Abtastsignale A1 bis A8 der acht Gruppen 1 bis 8 zugeführt sind. Der Baustein 20.1 bestimmt das Abtastsignal aus A1 bis A8, welches die minimale Amplitude aufweist. In gleicher Weise werden in weiteren Bausteinen 20.2, 20.3 und 20.4 die minimalen Abtastsignale aus B1 bis B8, C1 bis C8 und D1 bis D8 bestimmt.

Um diese Bestimmung in jeder Position innerhalb einer Teilungsperiode P1 mit großer Sicherheit zu ermöglichen, ist folgende Maßnahme besonders vorteilhaft.

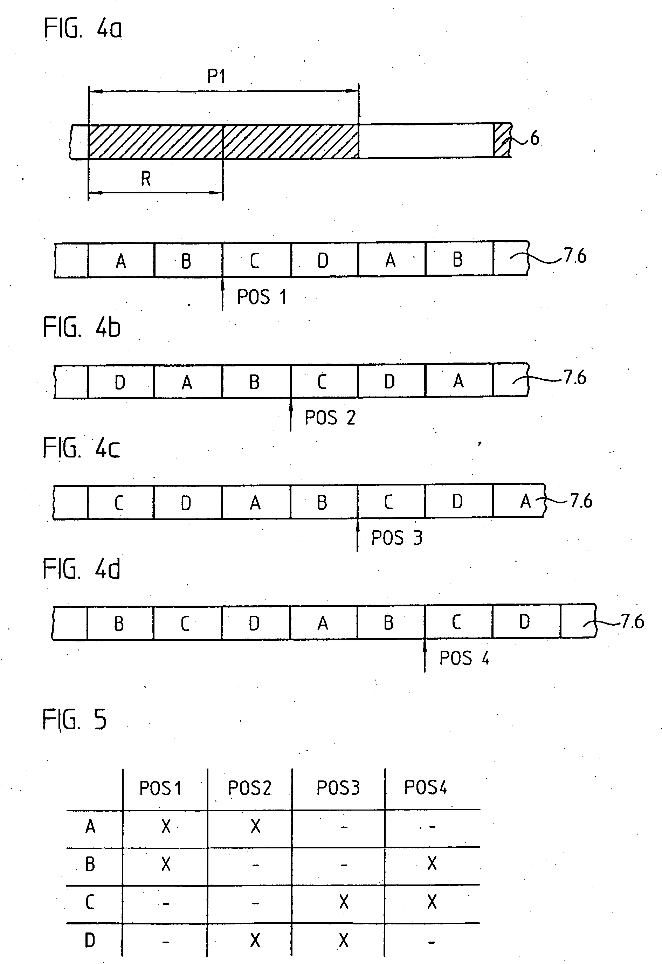

Es ist bekannt, dass innerhalb einer Teilungsperiode P1 nur partiell eine Veränderung R der Periodizität eingebracht ist. Es ist nun eine Steuereinheit 30 vorgesehen, die gewährleistet, dass innerhalb einer Teilungsperiode P1 bis P8 immer die gleichphasigen Abtastsignale der Gruppen 1 bis 8 miteinander verglichen werden, bei denen auf jeden Fall die Signalstörung in Form der maximalen Amplitudenabsenkung enthalten ist. Zur Erläuterung dieses Sachverhaltes sind in Figur 4a bis 4d vier verschiedene Positionen POS1 bis POS4 der Detektoranordnung 7.6 gegenüber der Inkrementalteilung 6 dargestellt. In der ersten Position POS1 steht das Detektorelement A und B der Referenzmarkierung R gegenüber, so dass innerhalb der gleichphasigen Abtastsignale A1 bis A8 sowie der gleichphasigen Abtastsignale B1 bis B8 ein einziges der Abtastsignale gegenüber den weiteren sieben Abtastsignalen den größten Amplitudenunterschied aufweist. Zur Ermittlung der Position Z wird in der Position POS1 somit der Baustein 20.1 verwendet. In Figur 5 ist dargestellt, welche Detektorelemente A, B, C, D bzw. Abtastsignale in welcher Position POS1 bis POS4 verwendet werden. Da innerhalb jeder Position POS1 bis POS4 zwei Detektorelemente A, B, C, D bzw. Abtastsignale verwendet werden können, ist in diesem Beispiel auch eine redundante Information erzeugbar. Die Positionen POS1 bis POS4 innerhalb einer Teilungsperiode P1 bis P8 sind durch den Interpolationswert Q eindeutig bestimmt.

Zur besseren Erläuterung des Prinzips der Erfindung erstrecken sich die Detektoranordnungen 7.5, 7.6 in Figur 2 nur über die Länge eines Codeelementes C2. Zur Bildung des Codewortes CW müssen mehrere Codeelemente C1, C2, C3 gleichzeitig abgetastet werden, so dass sich die Detektoranordnung 7.5 in der Praxis über mehrere Codeelemente C1, C2, C3 erstreckt. Dieser Raum kann nun auch vorteilhaft zur Abtastung der Inkrementalteilung 6 genutzt werden, indem sich die Anordnung der acht Detektorgruppen 1 bis 8 in Messrichtung X mehrfach wiederholt. Indem gleichphasige Abtastsignale der Gruppen 1 bis 8 der mehreren Anordnungen aufsummiert werden, ist die Signalerzeugung gegen partielle Verschmutzungen relativ unempfindlich. Auch die Abtastung der Referenzmarkierung R wird sehr verschmutzungsunempfindlich, da diese über den gesamten Abtastbereich mehrfach abgetastet wird und daher die Verschmutzung einer Referenzmarkierung R noch zu keinem Signalausfall führt.

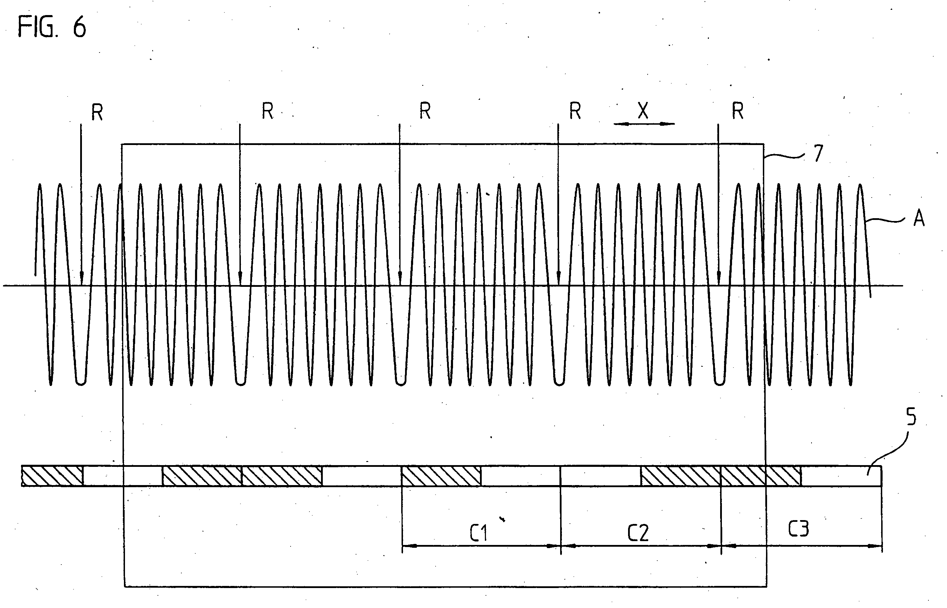

In Figur 6 ist das Prinzip dieser Mehrfachabtastung dargestellt. Innerhalb der Länge des Abtastfeldes 7 wird die Referenzmarkierung R vier mal abgetastet. Die Länge des Abtastfeldes 7 ist dabei vier mal dem Abstand der Referenzmarkierung R gewählt, um in jeder Position gleich viele Referenzmarkierungen R abzutasten. In Figur 6 ist eines der analogen Abtastsignale A dargestellt.

Nachfolgend wird eine vorteilhafte Anordnung und Auswertung des Codes 5 näher erläutert.

Figur 7 zeigt eine Momentanstellung des Codes 5 relativ zur Abtasteinrichtung 2. Die Detektorelemente D1 bis D11 sind aufeinanderfolgend in einem Abstand mit der halben Breite eines Teilbereiches C1A bis C3B des Codes 5 angeordnet. Dadurch ist sichergestellt, dass in jeder Position zumindest ein Detektorelement D1 bis D11 einem Teilbereich C1A bis C3B eindeutig zugeordnet ist und nicht einen Übergang zwischen zwei Teilbereichen C1A bis C3B abtastet. In der dargestellten Position wird der Teilbereich C1A vom Detektorelement D1 und der Teilbereich C1B vom Detektorelement D3 abgetastet. Die Detektorelemente D1, D3 erfassen die Lichtverteilung und erzeugen in Abhängigkeit der Lichtintensität ein analoges Abtastsignal S1A, S1B proportional zur Lichtintensität. Da die beiden Teilbereiche C1A und C1B komplementär zueinander ausgebildet sind, ist auch die Intensität der Abtastsignale S1A und S1B invers zueinander, die Signalpegel sind also weit voneinander beabstandet.

Dieser Signalabstand wird nun zur Erzeugung der binären Information B1 ausgenutzt, indem geprüft wird, welches der beiden Abtastsignale S1A, S1B des Codeelementes C1 größer ist. Diese Prüfung kann durch Quotientenbildung oder durch Differenzbildung erfolgen. Am Beispiel wird die Differenzbildung eingesetzt, wozu gemäß Figur 7 als Vergleichseinrichtung ein Triggerbaustein T1 dient. Der Triggerbaustein T1 erzeugt B1=0, wenn S1A kleiner S1B und B1=1, wenn S1A größer S1B ist. In gleicher Weise werden binäre Informationen B2 und B3 durch Abtastung der Codeelemente C2, C3 und Vergleich der analogen Abtastsignale S2A, S2B; S3A, S3B der Teilbereiche C2A, C2B; C3A, C3B jeweils eines Codeelementes C2, C3 durch Triggerbausteine T2, T3 gewonnen.

Einer ersten Abfolge der komplementär zueinander ausgebildeten Teilbereichen C1A, C1B; C2A, C2B; C3A, C3B wird also ein erster digitaler Wert und einer zweiten Abfolge der komplementär zueinander ausgebildeten Teilbereichen C1A, C1B; C2A, C2B; C3A, C3B wird ein zweiter digitaler Wert zugeordnet. Im Beispiel wird der Abfolge opak → transparent der Wert 0 und der Abfolge transparent → opak der Wert 1 zugeordnet.

Da die beiden Teilbereiche C1A, C2A, C3A und C1B, C2B, C3B jedes Codeelementes C1, C2, C3 zueinander komplementär sind, ist der Störabstand der Abtastsignale S sehr groß. Eine Veränderung der Lichtintensität der Lichtquelle 3 beeinflusst die Abtastsignale S beider Teilbereiche C1A, C1B; C2A, C2B; C3A, C3B gleichermaßen.

Aufgrund der komplementären Ausgestaltung jeweils zweier Teilbereiche C1A, C1B; C2A, C2B; C3A, C3B eines Codeelementes C1, C2, C3 müssen bei korrekter Betriebsweise der Positionsmesseinrichtung durch Abtastung dieser Teilbereiche C1A, C1B; C2A, C2B; C3A, C3B jeweils analoge Abtastsignale S erzeugt werden, deren Differenz einen vorgegebenen Wert übersteigt. Durch Beobachtung dieses Differenzwertes ist eine gute Fehlerprüfung möglich. Die Grundlage dieser Fehlerprüfung ist, dass davon ausgegangen werden kann, dass bei Unterschreiten des Differenzwertes um einen vorgegebenen Betrag die binäre Information B1, B2, B3 unsicher ist und daher zu dieser binären Information B1, B2, B3 ein Fehlersignal erzeugt wird.

Das Prinzip der Fehlerprüfung wird nur kurz erläutert. Die analogen Abtastsignale S1A und S1B des Codeelementes C1 werden einer Fehlerprüfeinrichtung zugeführt. Die Fehlerprüfeinrichtung vergleicht S1A und S1B durch Differenzbildung (S1A - S1B) und prüft, ob der Differenzbetrag einen vorgegebenen Vergleichswert übersteigt oder nicht übersteigt. Wenn der Differenzbetrag (S1A - S1B) den vorgegebenen Vergleichswert nicht übersteigt, wird ein Fehlersignal ausgegeben.

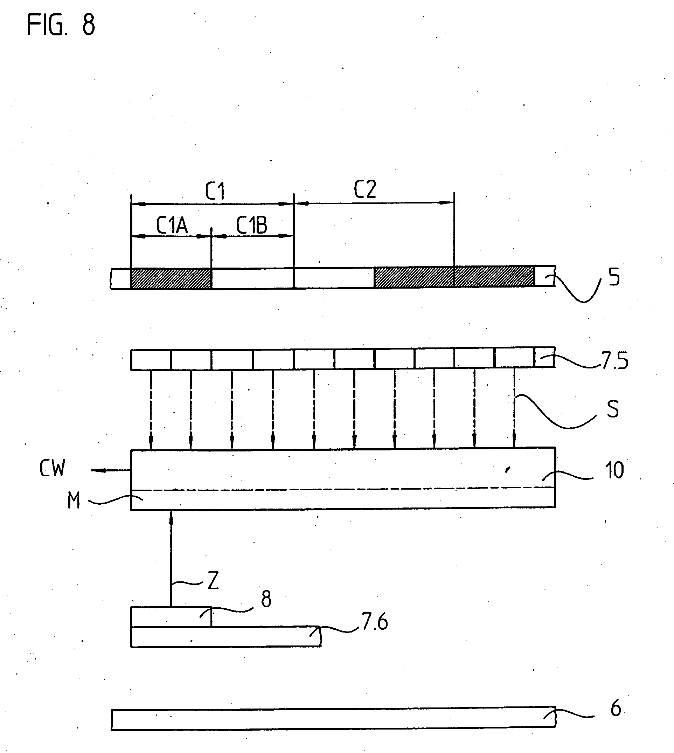

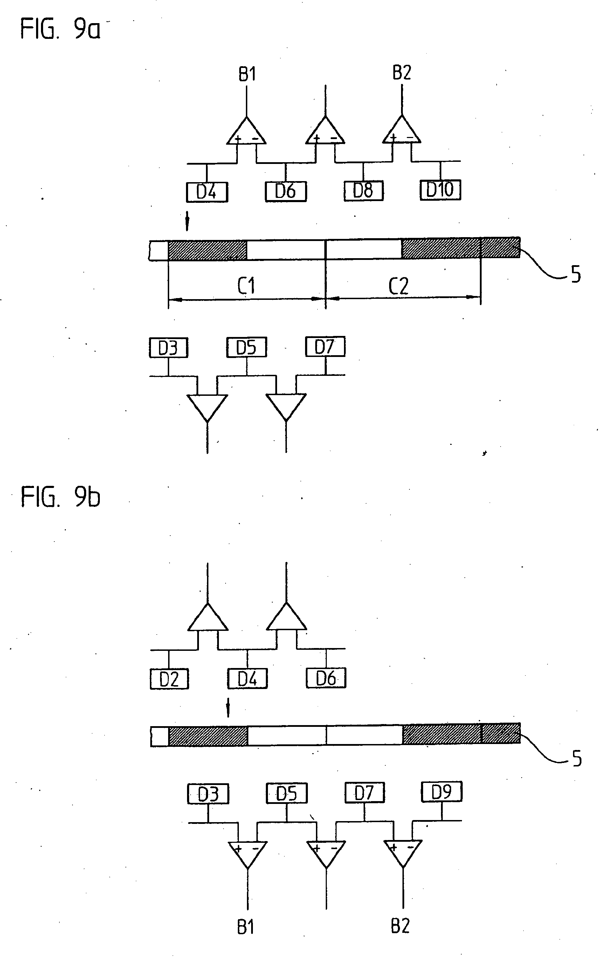

Am Beispiel der Detektorelemente D1 und D2 ist in Figur 7 leicht erkennbar, dass bei einer Verschiebung des Codes 5 um die Länge eines Teilbereiches C1A, C1B; C2A, C2B; C3A, C3B nach links das Detektorelement D1 den Teilbereich C1 B und das Detektorelement D3 den Teilbereich C2A abtastet, also Teilbereiche zweier Codeelemente C1, C2. Der Triggerbaustein T1 kann somit keine einem Codeelement C1, C2, C3 zugeordnete binäre Information B1, B2, B3 liefern. Nachfolgend werden nun Maßnahmen erläutert, mit denen sichergestellt wird, dass zur Codeworterzeugung die korrekten Detektorelemente D1 bis D11 verwendet werden, also die Detektorelemente D1 bis D11, die jeweils die Teilbereiche eines einzigen Codeelementes C1, C2, C3 abtasten. Anhand der Figuren 8 und 9a bis 9d wird eine bevorzugte Maßnahme hierfür beschrieben. Wie bereits erläutert, ist parallel neben dem Code 5 die Inkrementalspur 6 angeordnet. Durch den Positionswert Z ist nun auf einfache Weise eine Unterscheidung des rechten und linken Teilbereiches C1A, C1B; C2A, C2B; C3A, C3B eines Codeelementes C1, C2, C3 möglich. Der Positionswert Z definiert die Reihenfolge der Teilbereiche C1A, C1B; C2A, C2B; C3A, C3B eindeutig und er dient als Steuersignal zur Festlegung der Detektorelemente D1 bis D11, aus denen ein korrektes Codewort CW erzeugbar ist. Das Steuersignal Z definiert also, welche Abtastsignale S miteinander verglichen werden und aus welchen Abtastsignalen S digitale Werte B1, B2, B3 für das Codewort CW gewonnen werden können.

Zur weiteren Erläuterung dieses Verfahrens sind in den Figuren 9a bis 9d vier verschiedene Positionen des Codes 5 gegenüber der Detektoranordnung 7.5 dargestellt. Die Detektorelemente D1 bis D11 sind in Messrichtung X in Abständen entsprechend der halben Länge eines Teilbereiches C1A, C1B; C2A, C2B; C3A, C3B angeordnet und jeweils zwei Detektorelemente D1 bis D11, die in einem gegenseitigen Abstand entsprechend der Länge eines Teilbereiches C1A, C1B; C2A, C2B; C3A, C3B angeordnet sind, sind in Differenz geschaltet.

In Figur 9a ist die erste Position dargestellt. Eine Steuereinheit M wählt in Abhängigkeit der Positionsinformation Z die Detektorelemente D4 und D6 aus. Das Bit B1 des Codeelementes C1 wird durch Differenzbildung der Detektorelemente D4 und D6, also (D4-D6) gebildet.

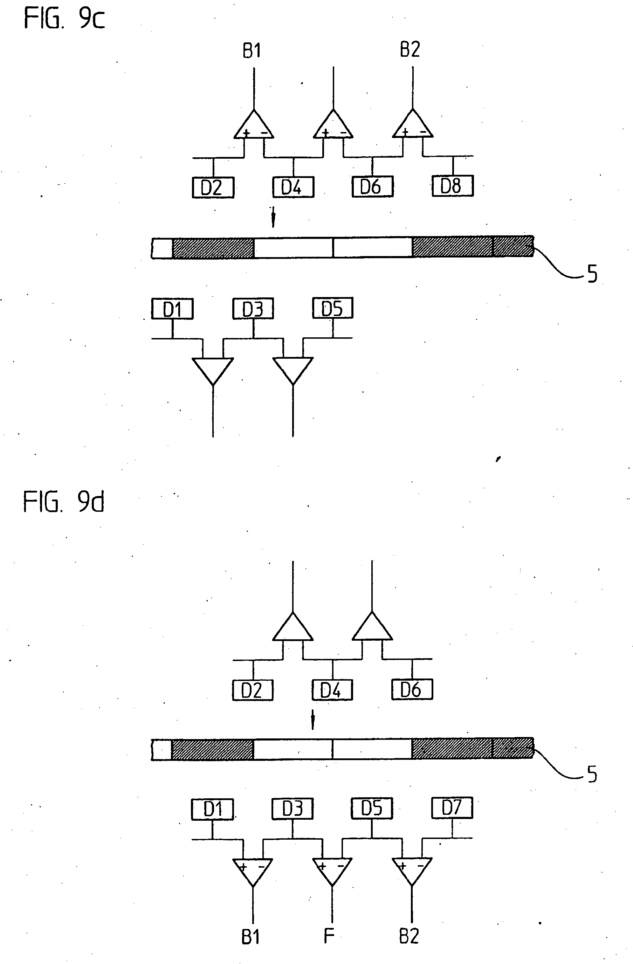

Bei der zweiten Position P2 gemäß Figur 9b wählt die Steuereinheit M die Detektorelemente D3 und D5 aus. Bei der dritten Position gemäß Figur 9c werden von der Steuereinheit M die Detektorelemente D2 und D4 zur Differenzbildung ausgewählt. Bei der vierten Position gemäß Figur 9d die Detektorelemente D1 und D3.

In gleicher Weise werden die korrekten Detektorelemente zur Bildung der weiteren Bits B2, B3 des Codewortes CW ermittelt. Wenn beispielsweise zur Bildung des Bits B1 die Detektorelemente D1 und D3 ausgewählt worden sind, dienen zur Bildung des Bits B2 die Detektorelemente D5 und D7 sowie zur Bildung des Bits B3 die Detektorelemente D9 und D11, wie in Figur 7 dargestellt ist. Wobei in Figur 7 nur die in dieser Momentanstellung verwendeten Triggerbausteine T1, T2, T3 dargestellt sind.

Eine weitere Möglichkeit zur Ermittlung der korrekten Detektorelemente D1 bis D11 bzw. der korrekten analogen Abtastsignale S besteht darin, dass alle Detektorelemente D1 bis D11, die im Abstand der Länge eines Teilbereiches C1A, C1B; C2A, C2B; C3A, C3B voneinander beabstandet sind miteinander verglichen werden. Im Abstand eines Codeelementes C1, C2, C3 gibt es nun Detektorpaare D1, D3 und D5, D7 - am Beispiel der in Figur 9d dargestellten Momentanposition- die in gewünschter Weise jeweils die Differenz der Teilbereiche C1A, C1B; C2A, C2B; C3A, C3B eines Codeelementes C1, C2 abtasten. Die weiteren Detektorpaare D3, D5 tasten aufeinanderfolgende Teilbereiche zweier aufeinanderfolgender Codeelemente C1, C2 ab und erzeugen somit mit der vorher erläuterten Fehlerprüfung ein Fehlersignal F. Um nun die korrekten Detektorelemente D1 bis D11 zu ermitteln, wird die Detektorgruppe D1, D3; D5, D7 gesucht, bei der am wenigsten Fehlersignale auftreten. Im Detail ist bzw. sind zur Durchführung dieser zweiten möglichen Maßnahme folgende Anordnung bzw. folgende Verfahrensschritte erforderlich:
- Detektorelemente D1 bis D11 sind in Messrichtung X in Abständen entsprechend der halben Länge eines Teilbereiches C1A, C1B; C2A, C2B; C3A, C3B angeordnet;
- die Detektorelemente D1 bis D11 bilden eine erste Gruppe (in den Figuren 9a bis 9d geradzahlig nummerierte Detektorelemente D2, D4, D6, D8, D10) mit einem gegenseitigen Abstand entsprechend der Länge eines Teilbereiches C1A, C1B; C2A, C2B; C3A, C3B;
- die Detektorelemente D1 bis D11 bilden eine zweite Gruppe (in den Figuren 9a bis 9d ungeradzahlig nummerierte Detektorelemente D1, D3, D5, D7, D9) mit einem gegenseitigen Abstand entsprechend der Länge eines Teilbereiches C1A, C1B; C2A, C2B; C3A, C3B;
- die Detektorelemente D2, D4, D6, D8, D10 der ersten Gruppe sind gegenüber den Detektorelementen D1, D3, D5, D7, D9 der zweiten Gruppe um die halbe Länge eines Teilbereiches C1A, C1B; C2A, C2B; C3A, C3B versetzt angeordnet;
- unmittelbar aufeinanderfolgende Detektorelemente einer Gruppe sind jeweils in Differenz geschaltet;
- von den beiden Gruppen werden nun die Vergleichsergebnisse der Detektorelementenpaare in einem Raster entsprechend der Länge eines Codeelementes C1, C2, C3 zur Bildung des Codewortes CW verwendet, dessen Folge am wenigsten Fehler F erzeugt, gemäß Figur 9d also die Folge (D1-D3)=B1, (D5-D7)=B2 usw.

Die beiden Teilbereiche C1A, C1B; C2A, C2B; C3A, C3B eines jeden Codeelementes C1, C2, C3 können optisch abtastbar ausgebildet sein, wobei dann ein Teilbereich für das Abtastlicht transparent oder reflektierend und der andere Teilbereich opak oder nicht reflektierend ausgebildet ist.

Die Erfindung ist beim optischen Abtastprinzip besonders vorteilhaft einsetzbar. Die Erfindung ist aber nicht auf dieses Abtastprinzip beschränkt, sondem auch bei magnetischen, induktiven sowie kapazitiven Abtastprinzipien einsetzbar.

Die Positionsmesseinrichtung kann zur Messung von linearen oder rotatorischen Bewegungen eingesetzt werden. Die zu messenden Objekte können dabei der Tisch und der Schlitten einer Werkzeugmaschine, einer Koordinatenmessmaschine oder der Rotor und der Stator eines Elektromotors sein.

## Patentansprüche

1. Positionsmesseinrichtung mit
- einer sequentiellen absoluten Codierung (5) mit einer in Messrichtung (X) hintereinander angeordneten Folge von Codeelementen (C1, C2, C3) zur absoluten Positionsmessung in Messschritten entsprechend der Länge eines Codeelementes (C1, C2, C3);
- einer parallel neben der absoluten Codierung (5) angeordneten periodischen Inkrementalteilung (6) mit mehreren Teilungsperioden (P1 - P8) innerhalb jeweils eines der Codeelemente (C1, C2, C3);
- einer innerhalb jeweils der Länge eines der Codeelemente (C1, C2, C3) angeordneten und in die Inkrementalteilung (6) integrierten Referenzmarkierung (R);
- einer Anordnung (7.6) von Detektorelementen (A, B, C, D) über zumindest die Länge eines der Codeelemente (C1, C2, C3) zur Abtastung der Inkrementalteilung (6) und zum Erzeugen mehrerer periodischer Abtastsignale (A1 bis D8) von denen zumindest eines durch die Referenzmarkierung (R) lokal modifiziert ist;
- einer Auswerteeinrichtung (8) zum Empfang der Abtastsignale (A1 bis D8) und zum Detektieren des zumindest einen durch die Referenzmarkierung (R) modifizierten Abtastsignals (A1, B1) aus den Abtastsignalen (A1 bis D8) sowie zum Bestimmen einer absoluten Position (Z) der Referenzmarkierung (R) innerhalb der Länge eines der Codeelemente (C1, C2, C3) abhängig vom detektierten Abtastsignal (A1, B1).

2. Positionsmesseinrichtung nach Anspruch 1, wobei
- innerhalb jeweils eines der Codeelemente (C1, C2, C3) N Teilungsperioden (P1 bis P8) angeordnet sind, mit N>1 und ganzzahlig;
- die Anordnung (7.6) der Detektorelemente (A, B, C, D) über die Länge eines der Codeelemente (C1, C2, C3) N Gruppen (1 bis 8) bildet und sich jede Gruppe (1 bis 8) der Detektorelemente (A, B, C, D) über die Länge einer Teilungsperiode (P1 bis P8) erstreckt;
- innerhalb jeder Gruppe (1 bis 8) mehrere um einen Bruchteil einer Teilungsperiode (P1 bis P8) voneinander beabstandete Detektorelemente (A, B, C, D) angeordnet sind um innerhalb einer Gruppe (1 bis 8) mehrere gegeneinander phasenverschobene periodische Abtastsignale (A1, B1, C1, D1 bis A8, B8, C8, D8) zu erzeugen.

3. Positionsmesseinrichtung nach Anspruch 2, wobei Mittel vorhanden sind, um gleichphasige Abtastsignale (A1 bis A8; B1 bis B8; C1 bis C8; D1 bis D8) aller Gruppen (1 bis 8) jeweils zu einem gemeinsamen Summensignal (PA, PB, PC, PD) auf zu addieren.

4. Positionsmesseinrichtung nach Anspruch 3, aufweisend eine Interpolationseinheit (9), wobei die Summensignale (PA, PB, PC, PD) der Interpolationseinheit (9) zur Bestimmung einer absoluten Position (Q) innerhalb einer Teilungsperiode (P1 bis P8) zugeführt sind.

5. Positionsmesseinrichtung nach Anspruch 2, wobei gleichphasige Abtastsignale (A1 bis A8; B1 bis B8; C1 bis C8; D1 bis D8) der N Gruppen der Auswerteeinheit (8) zugeführt sind, welche ausgebildet ist, um jeweils die gleichphasigen Abtastsignale (A1 bis A8; B1 bis B8; C1 bis C8; D1 bis D8) miteinander zu vergleichen und aus dem Vergleichsergebnis ein Abtastsignal (A1, B1) der Gruppe (1 bis 8) zu bestimmen, das durch die Referenzmarkierung (R) modifiziert ist, wobei diese Gruppe (1 bis 8) die Position (Z) der Referenzmarkierung (R) innerhalb der Länge eines der Codeelemente (C1, C2, C3) bestimmt.

6. Positionsmesseinrichtung nach einem der vorhergehenden Ansprüche, wobei die Referenzmarkierung (R) eine Veränderung eines Zwischenraums einer Folge von gleichbeabstandeten Markierungen ist, welche die Inkrementalteilung (6) bildet.

7. Positionsmesseinrichtung nach einem der vorhergehenden Ansprüche, wobei die Länge der Detektoranordnung (7.6) ein ganzzahlig Vielfaches des Abstandes zweier aufeinanderfolgender Referenzmarkierungen (R) ist.

8. Verfahren zur Positionsmessung mit folgenden Verfahrensschritten
- Abtasten einer sequentiellen absoluten Codierung (5), bestehend aus einer in Messrichtung (X) hintereinander angeordneten Folge von Codeelementen (C1, C2, C3), und Bilden einer absoluten Position in Messschritten entsprechend der Länge eines Codeelementes (C1, C2, C3);
- Abtasten mehrerer Teilungsperioden (P1 bis P8) einer parallel neben der absoluten Codierung (5) angeordneten Inkremental-teilung (6) mittels einer über die Länge eines der Codeelemente (C1, C2, C3) sich erstreckende Detektoranordnung (7.6), wobei in eine der Teilungsperioden (P1) eine Referenzmarkierung (R) integriert ist und Erzeugen mehrerer periodischer Abtastsignale (A1 bis D8) von denen zumindest eines durch die Referenzmarkierung (R) lokal modifiziert ist;
- Detektieren des zumindest einen durch die Referenzmarkierung (R) modifizierten Abtastsignals (A1, B1) aus den Abtastsignalen (A1 bis D8);
- Bestimmen einer absoluten Position (Z) der Referenzmarkierung (R) innerhalb der Länge des Codeelementes (C1, C2, C3) abhängig vom detektierten Abtastsignal (A1, B1).

9. Verfahren nach Anspruch 8, wobei durch das Abtasten mehrerer Teilungsperioden (P1 bis P8) der Inkrementalteilung (6) innerhalb jeder Teilungsperiode (P1 bis P8) eines der Codeelemente (C1, C2, C3) mehrere gegeneinander phasenverschobene Abtastsignale (A1 bis D8) erzeugt werden.

10. Verfahren nach Anspruch 9, wobei jeweils gleichphasige Abtastsignale (A1 bis A8; B1 bis B8; C1 bis C8; D1 bis D8) aller Teilungsperioden (P1 bis P8) zu einem gemeinsamen Summensignal (PA, PB, PC, PD) aufaddiert werden.

11. Verfahren nach Anspruch 10, wobei die Summensignale (PA, PB, PC, PD) einer Interpolationseinheit (9) zugeführt werden und eine absolute Position (Q) innerhalb einer Teilungsperiode (P1 bis P8) der Inkrementalteilung (6) ermittelt wird.

12. Verfahren nach Anspruch 9, wobei jeweils gleichphasige Abtastsignale (A1 bis A8; B1 bis B8; C1 bis C8; D1 bis D8) aller Teilungsperioden (P1 bis P8) miteinander verglichen werden und aus dem Vergleich das Abtastsignal (A1-D8) bestimmt wird, dessen Amplitude durch die Referenzmarkierung (R) modifiziert ist.

13. Verfahren nach Anspruch 11 und 12, wobei durch die absolute Position (Q) innerhalb einer Teilungsperiode (P1 bis P8) die zu vergleichenden Abtastsignale (A1 bis A8; B1 bis B8; C1 bis C8, D1 bis D8) innerhalb einer Teilungsperiode (P1 bis P8) zur Bildung der absoluten Position (Z) der Referenzmarkierung (R) innerhalb der Länge eines der Codeelemente (C1, C2, C3) bestimmt werden.

## Claims

1. Position measuring device having
- a sequential absolute coding (5) with a sequence of code elements (C1, C2, C3), arranged one behind another in a measuring direction (X), for absolute position measurement in measurement steps in accordance with the length of a code element (C1, C2, C3);
- a periodic incremental graduation (6), arranged in parallel next to the absolute coding (5), with a plurality of graduation periods (P1-P8) respectively within one of the code elements (C1, C2, C3);
- a reference mark (R) arranged respectively within the length of one of the code elements (C1, C2, C3) and integrated in the incremental graduation (6);
- an arrangement (7.6) of detector elements (A, B, C, D) over at least the length of one of the code elements (C1, C2, C3) for scanning the incremental graduation (6) and for generating a plurality of periodic scanning signals (A1 to D8) of which at least one is modified locally by the reference mark (R); and
- an evaluation device (8) for receiving scanning signals (A1 to D8) and for detecting the at least one scanning signal (A1, B1), modified by the reference mark (R), from the scanning signals (A1 to D8), and also for determining an absolute position (Z) of the reference mark (R) within the length of one of the code elements (C1, C2, C3) as a function of the detected scanning signal (A1, B1).

2. Position measuring device according to Claim 1, in which
- arranged respectively within one of the code elements (C1, C2, C3) are N graduation periods (P1 to P8), where N>1 and is an integer;
- the arrangement (7.6) of the detector elements (A, B, C, D) over the length of one of the code elements (C1, C2, C3) forms N groups (1 to 8), and each group (1 to 8) of the detector elements (A, B, C, D) extends over the length of a graduation period (P1 to P8); and
- a plurality of detector elements (A, B, C, D) are arranged spaced apart from one another by a fraction of one graduation period (P1 to P8) within each group (1 to 8) in order to generate within a group (1 to 8) a plurality of periodic scanning signals (A1, B1, C1, D1 to A8, B8, C8, D8) which are phase-shifted from one another.

3. Position measuring device according to Claim 2, in which means are present for respectively adding up in-phase scanning signals (A1 to A8; B1 to B8; C1 to C8; D1 to D8) of all the groups (1 to 8) to form a common summation signal (PA, PB, PC, PD).

4. Position measuring device according to Claim 3, having an interpolation unit (9), with summation signals (PA, PB, PC, PD) being fed to the interpolation unit (9) in order to determine an absolute position (Q) within one graduation period (P1 to P8).

5. Position measuring device according to Claim 2, in which in-phase scanning signals (A1 to A8; B1 to B8; C1 to C8; D1 to D8) of the N groups are fed to the evaluation unit (8), which is designed to respectively compare with one another the in-phase scanning signals (A1 to A8; B1 to B8; C1 to C8; D1 to D8) and to determine from the result of comparison a scanning signal (A1, B1) of the group (1 to 8) which is modified by the reference mark (R), this group (1 to 8) determining the position (Z) of the reference mark (R) within the length of one of the code elements (C1, C2, C3).

6. Position measuring device according to one of the preceding claims, in which the reference mark (R) is a variation in an interspace of a sequence of marks spaced apart equally which forms the incremental graduation (6).

7. Position measuring device according to one of the preceding claims, in which the length of the detector arrangement (7.6) is an integral multiple of the spacing between two reference marks (R) following one another.

8. Method for position measurement, having the following method steps:
- scanning a sequential absolute coding (5) which comprises a sequence of code elements (C1, C2, C3), arranged one behind the other in the measuring direction (X) and forming an absolute position in measurement steps in accordance with the length of a code element (C1, C2, C3);
- scanning a plurality of graduation periods (P1 to P8) of an incremental graduation (6) arranged in parallel next to the absolute coding (5), by means of a detector arrangement (7.6) extending over the length of one of the code elements (C1, C2, C3), a reference mark (R) being integrated in one of the graduation periods (P1), and generating a plurality of periodic scanning signals (A1 to D8) of which at least one is modified locally by the reference mark (R);
- detecting at least one scanning signal (A1, B1), modified by the reference mark (R), from the scanning signals (A1 to D8); and
- determining an absolute position (Z) of the reference mark (R) within the length of the code element (C1, C2, C3) as a function of the detected scanning signal (A1, B1).

9. Method according to Claim 8, in which a plurality of scanning signals (A1 to D8) which are phase-shifted from one another are generated by the scanning of a plurality of graduation periods (P1 to P8) of the incremental graduation (6) within each graduation period (P1 to P8) of one of the code elements (C1, C2, C3).

10. Method according to Claim 9, in which in-phase scanning signals (A1 to A8; B1 to B8; C1 to C8; D1 to D8) of all the graduation periods (P1 to P8) are respectively added up to form a common summation signal (PA, PB, PC, PD).

11. Method according to Claim 10, in which the summation signals (PA, PB, PC, PD) are fed to an interpolation unit (9), and an absolute position (Q) is determined within one graduation period (P1 to P8) of the incremental graduation (6).

12. Method according to Claim 9, in which in-phase scanning signals (A1 to A8; B1 to B8; C1 to C8; D1 to D8) of all the graduation periods (P1 to P8) are respectively compared with one another, and the scanning signal (A1-D8) whose amplitude is modified by the reference mark (R) is determined from the comparison.

13. Method according to Claims 11 and 12, in which the scanning signals (A1 to A8; B1 to B8; C1 to C8; D1 to D8) to be compared are determined by the absolute position (Q) within one graduation period (P1 to P8) in order to form the absolute position (Z) of the reference mark (R) within the length of one of the code elements (C1, C2, C3).

## Revendications

1. Dispositif de mesure de position comprenant
- un codage séquentiel absolu (5) avec une suite d'éléments de codage (C1, C2, C3) disposés les uns derrière les autres dans le sens de la mesure (X) pour la mesure de position absolue en pas de mesure correspondant à la longueur d'un élément de codage (C1, C2, C3) ;
- une division incrémentale (6) périodique disposée en parallèle à côté du codage absolu (5) comprenant plusieurs périodes de division (P1 - P8) à chaque fois à l'intérieur de l'un des éléments de codage (C1, C2, C3) ;
- un marquage de référence (R) disposé à chaque fois à l'intérieur de la longueur de l'un des éléments de codage (C1, C2, C3) et intégré dans la division incrémentale (6) ;
- un arrangement (7.6) d'éléments de détection (A, B, C, D) sur au moins la longueur de l'un des éléments de codage (C1, C2, C3) pour le palpage de la division incrémentale (6) et pour générer plusieurs signaux de palpage périodiques (A1 à D8) dont au moins l'un est modifié localement par le marquage de référence (R) ;
- un dispositif d'interprétation (8) pour recevoir les signaux de palpage (A1 à D8) et pour détecter l'au moins un signal de palpage (A1, B1) modifié par le marquage de référence (R) parmi les signaux de palpage (A1 à D8) ainsi que pour déterminer une position absolue (Z) du marquage de référence (R) à l'intérieur de la longueur de l'un des éléments de codage (C1, C2, C3) en fonction du signal de palpage (A1, B1) détecté.

2. Dispositif de mesure de position selon la revendication 1, avec lequel
- N périodes de division (P1 à P8) sont disposées à chaque fois à l'intérieur de l'un des éléments de codage (C1, C2, C3), avec N > 1 et étant un nombre entier ;
- l'arrangement (7.6) des éléments de détection (A, B, C, D) forme N groupes (1 à 8) sur la longueur de l'un des éléments de codage (C1, C2, C3) et chaque groupe (1 à 8) des éléments de détection (A, B, C, D) s'étend sur la longueur d'une période de division (P1 à P8) ;
- plusieurs éléments de détection (A, B, C, D) espacés les un des autres d'une fraction d'une période de division (P1 à P8) sont disposés à l'intérieur de chaque groupe (1 à 8) afin de générer, à l'intérieur d'un groupe (1 à 8), plusieurs signaux de palpage périodiques (A1, B1, C1, D1 à A8, B8, C8, D8) mutuellement déphasés.

3. Dispositif de mesure de position selon la revendication 2, avec lequel il existe des moyens pour additionner les signaux de palpage (A1 à A8 ; B1 à B8 ; C1 à C8 ; D1 à D8) en phase de tous les groupes (1 à 8) à chaque fois en un signal total commun (PA, PB, PC, PD).

4. Dispositif de mesure de position selon la revendication 3, présentant une unité d'interpolation (9), avec lequel les signaux totaux (PA, PB, PC, PD) sont acheminés à l'unité d'interpolation (9) pour déterminer une position absolue (Q) à l'intérieur d'une période de division (P1 à P8).

5. Dispositif de mesure de position selon la revendication 2, avec lequel les signaux de palpage (A1 à A8 ; B1 à B8 ; C1 à C8 ; D1 à D8) en phase des N groupes sont acheminés à l'unité d'interprétation (8), laquelle est configurée pour comparer entre eux à chaque fois les signaux de palpage (A1 à A8 ; B1 à B8 ; C1 à C8 ; D1 à D8) en phase et pour déterminer à partir du résultat de la comparaison un signal de palpage (A1, B1) du groupe (1 à 8), lequel est modifié par le marquage de référence (R), ce groupe (1 à 8) déterminant la position (Z) du marquage de référence (R) à l'intérieur de la longueur de l'un des éléments de codage (C1, C2, C3).

6. Dispositif de mesure de position selon l'une des revendications précédentes, avec lequel le marquage de référence (R) est une modification d'un espace intermédiaire d'une suite de marquages équidistants qui forme la division incrémentale (6).

7. Dispositif de mesure de position selon l'une des revendications précédentes, avec lequel la longueur de l'arrangement détecteur (7.6) est un multiple entier de l'espacement entre deux marquages de référence (R) successifs.

8. Procédé de mesure de position comprenant les étapes de procédé suivantes
- palpage d'un codage séquentiel absolu (5), composé d'une suite d'éléments de codage (C1, C2, C3) disposés les uns derrière les autres dans le sens de la mesure (X), et formation d'une position absolue en pas de mesure correspondant à la longueur d'un élément de codage (C1, C2, C3) ;
- palpage de plusieurs périodes de division (P1 à P8) d'une division incrémentale (6) disposée en parallèle à côté du codage absolu (5) au moyen d'un arrangement détecteur (7.6) qui s'étend sur la longueur de l'un des éléments de codage (C1, C2, C3), un marquage de référence (R) étant intégré dans l'une des périodes de division (P1), et génération de plusieurs signaux de palpage périodiques (A1 à D8) dont au moins l'un est modifié localement par le marquage de référence (R) ;
- détection de l'au moins un signal de palpage (A1, B1) modifié par le marquage de référence (R) parmi les signaux de palpage (A1 à D8) ;
- détermination d'une position absolue (Z) du marquage de référence (R) à l'intérieur de la longueur de l'élément de codage (C1, C2, C3) en fonction du signal de palpage (A1, B1) détecté.

9. Procédé selon la revendication 8, selon lequel plusieurs signaux de palpage (A1 à D8) mutuellement déphasés sont générés par le palpage de plusieurs périodes de division (P1 à P8) de la division incrémentale (6) à l'intérieur de chaque période de division (P1 à P8) de l'un des éléments de codage (C1, C2, C3).

10. Procédé selon la revendication 9, selon lequel à chaque fais à chaque fais les signaux de palpage (A1 à A8 ; B1 à B8 ; C1 à C8 ; D1 à D8) en phase de toutes les périodes de division (P1 à P8) sont additionnés en un signal total commun (PA, PB, PC, PD).

11. Procédé selon la revendication 10, selon lequel les signaux totaux (PA, PB, PC, PD) sont acheminés à une unité d'interpolation (9) et une position absolue (Q) à l'intérieur d'une période de division (P1 à P8) de la division incrémentale (6) est déterminée.

12. Procédé selon la revendication 9, selon lequel à chaque fais les signaux de palpage (A1 à A8 ; B1 à B8 ; C1 à C8 ; D1 à D8) en phase de toutes les périodes de division (P1 à P8) sont comparés entre eux et le signal de palpage (A1 - D8) dont l'amplitude est modifiée par le marquage de référence (R) est déterminé à partir de la comparaison.

13. Procédé selon les revendications 11 et 12, selon lequel les signaux de palpage (A1 à A8 ; B1 à B8 ; C1 à C8 ; D1 à D8) à comparer à l'intérieur d'une période de division (P1 à P8) sont déterminés par la 5 position absolue (Q) à l'intérieur d'une période de division (P1 à P8) en vue de former la position absolue (Z) du marquage de référence (R) à l'intérieur de la longueur de l'un des éléments de codage (C1, C2, C3).
